# EUROPEAN PATENT APPLICATION

(11) **EP 2 533 026 A2**
(43) Date of publication of application: **12.12.2012**
(21) Application number: 12169792.4
(22) Date of filing: 29.05.2012
(51) Int. Cl.: G01J 5/00, G01J 5/04, G01J 5/02, G01J 5/08, G01J 1/02, G01J 1/04, G01J 1/06, G01J 1/18, G01J 1/42

(54) **Coaxial PIR and light sensor**

(30) Priority: 09.06.2011 AU 2011902278
(71) Applicant: Gerard Lighting Pty Ltd, Cavan, S.A. 5094 (AU)
(72) Inventor: Micko, Eric, Cavan, South Australia 5094 (AU); Gerard, Jason, Cavan, South Australia 5094 (AU)
(74) Representative: Vigars, Christopher Ian

(57) **Abstract**

A sensor comprising a PIR (passive infrared) sensor and a visible light sensor wherein the PIR sensor and the light sensor are coaxially aligned. The field of view of the PIR sensor and the field of view of the light sensor are coincident. The light lens is of a toroidal shape and the PIR sensor is located at the centre of the light lens.

## Description

### FIELD OF THE INVENTION

This invention relates to a combined PIR and light sensor, in particular a senor in which the PIR sensor and the light sensor are coaxially aligned to have the same field of view.

### BACKGROUND TO THE INVENTION

PIR (Passive Infrared) sensors and light sensors are often used in combination for the control of lighting systems in which it is desirable to only have lights illuminated when a person is present. Typically a light will be illuminated in response to movement detected by a PIR sensor, but only if the ambient light levels as detected by a light sensor warrant the need for lighting.

The behavior of a lighting system combining a PIR and light sensor will depend on the field of view of both of the sensors and to what degree they are aligned. When the fields of view are not aligned this can lead to the undesirable behavior of turning on a light when it is not needed and vice versa. This undesirable behavior is exacerbated when multiple independently controlled lights are in close proximity to each other

The object of this invention is to provide a coaxial PIR and light sensor that alleviates the above problem, or at least provides the public with a useful alternative.

### SUMMARY OF THE INVENTION

Therefore in one form of the invention there is proposed a sensor comprising a PIR (passive infrared) sensor and a visible light sensor wherein the PIR sensor and the light sensor are coaxially aligned.

In preference the field of view of the PIR sensor and the field of view of the light sensor are coincident.

Preferably the sensor further comprises a Fresnel lens and a light lens wherein the Fresnel lens defines the field of view of the PIR sensor and the light lens defines the field of view of the light sensor.

Preferably the light lens is of a toroidal shape and the PIR sensor is located at the centre of the light lens.

It should be noted that any one of the aspects mentioned above may include any of the features of any of the other aspects mentioned above and may include any of the features of any of the embodiments described below as appropriate.

### BRIEF DESCRIPTION OF THE DRAWINGS

The accompanying drawings, which are incorporated in and constitute a part of this specification, illustrate a preferred embodiment of the invention and, together with the description, serve to explain the advantages and principles of the invention. In the drawings:
Figure 1 is a perspective view of a sensor with its controls hidden;
Figure 2 is a perspective view showing of the sensor with its controls exposed;
Figure 3 is an exploded view of the sensor;
Figure 4 is a perspective view of the PCB and optical components of the sensor;
Figure 5 is a exploded view of the PCB and optical components; and
Figure 6 is a cross sectional view of the PCB and optical components of the sensor.

### LIST OF COMPONENTS

- 20: Sensor
- 22: Outer body
- 24: Inner body
- 26: Mounting flange
- 28, 29: Mounting clips
- 30, 31: Control sliders
- 32, 33: Slider recesses
- 36: Slider aperture
- 38: Retaining slot
- 39: Retaining lug
- 40: Cable clamp
- 41: Cable entry
- 42: Cable aperture
- 43: Tracer
- 45: Track
- 46: Clip retainer
- 47: Clip mount
- 48: Spring
- 50: Inner base
- 52: Inner escutcheon
- 54: PCB and optics assembly
- 56: PCB
- 57: Main lens
- 58, 59: Control switches
- 60, 61: Switch knobs
- 62: Shield
- 64: Light lens
- 66: PIR sensor
- 68: Lens support
- 70: Light sensor
- 71, 72: PIR legs

### DETAILED DESCRIPTION OF PREFERRED EMBODIMENT

The following detailed description of the invention refers to the accompanying drawings. Wherever possible, the same reference numbers will be used throughout the drawings and the following description to refer to the same and like parts. Dimensions of certain parts shown in the drawings may have been modified and/or exaggerated for the purposes of clarity or illustration.

In essence the invention is a PIR sensor combined with a light sensor in which the two sensors are coaxial. This gives the advantage that both sensors have the same field of view and thus the outputs from the sensors can be more usefully combined in control situations such as turning on lighting. The preferred embodiment described below is designed to be fitted into an aperture in ceiling or wall or in a device such as a luminaire.

Referring to the drawings now in greater detail where there is provided a sensor shown generally as 20.

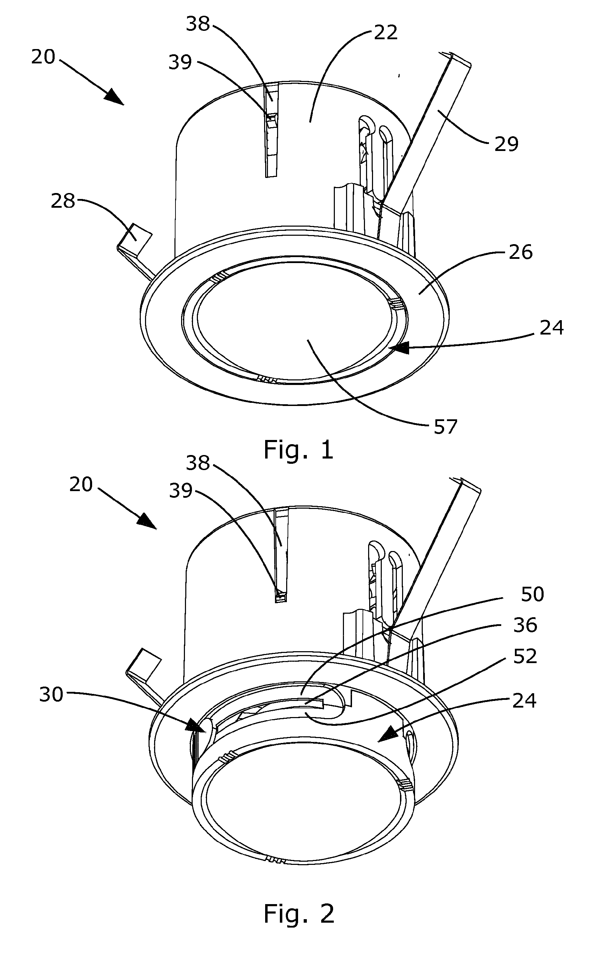

As seen in Figures 1 and 2 the main components of the sensor 20 are an outer body 22 from which an inner body can extend to reveal a control slider 30. The sensor 20 is mounted in a circular aperture of a ceiling or the like by means of mounting flange 26 in cooperation with mounting clips 29. Visible and infrared light enter the sensor via the main lens 57.

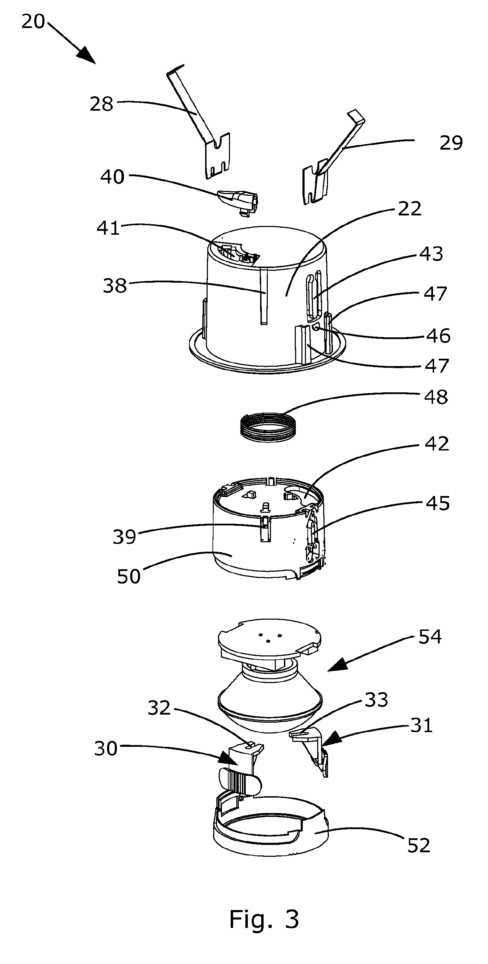

Further components of the sensor 20 can be seen in the exploded view of Figure 3.

The outer body 22 incorporates a cable entry 41 allowing a cable to enter the sensor and pass via the cable aperture 42 of the inner base 50 to the PCB and optics assembly 54. The cable is secured to the outer body 22 by means of cable clamp 40. The outer body 22 includes clip retainers 46 and clips mount 47 to attach the mounting clips 28 and 29.

The inner body 24 comprises an inner base 50, inner escutcheon 52, PCB and optics assembly 54, and control sliders 30 and 31.

The inner body 24 can extended from and retract into the outer body 22 by pushing upon the inner body. The movement is governed by a biasing means, in this case spring 48 positioned between the inner body 24 and outer body 22 and a tracer 43 of the outer body 22 guided within a track 45 of the inner base 50. The range of movement is further limited by a retaining lug 39 of the inner base 50 cooperating with a retaining slot 38 of the outer body 50.

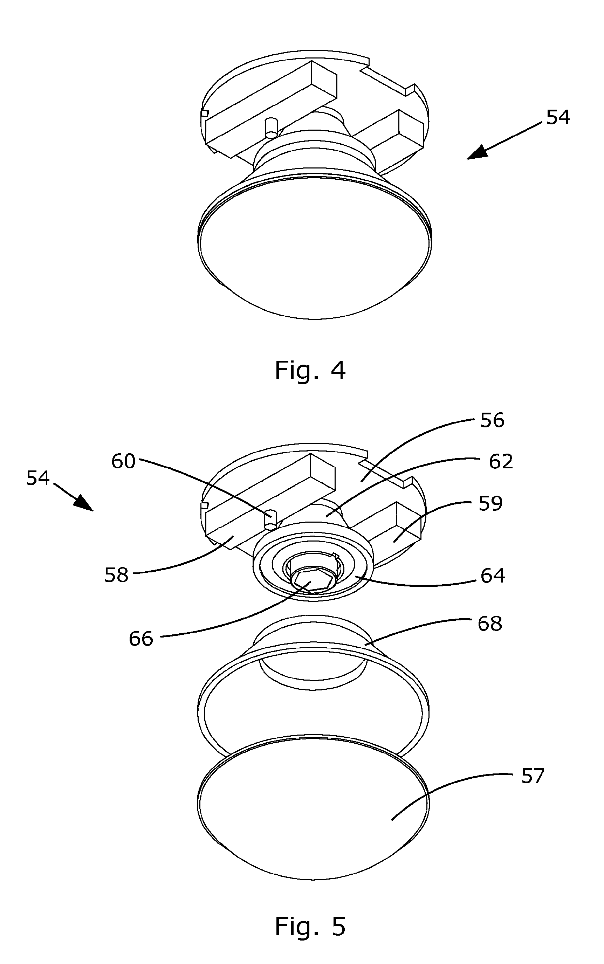

The control sliders 30 and 31 serve to actuate the control switches 58 and 59. As seen in Figure 2, a control slider 30 is constrained to move in an arc along the slider aperture 36 between the inner base 50 and inner escutcheon 52. The control sliders 30 and 31 incorporate recesses 32 and 33 which engage knobs 60 and 61 of the control switches 58 and 59 (seen in Figure 5). The curvilinear movement of the control sliders is translated into rectilinear movement of the control switches. Other control means such as potentiometers could readily replace the control switches.

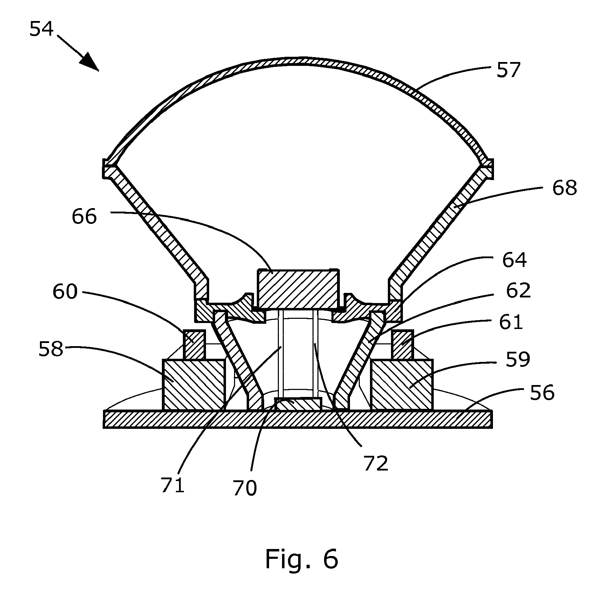

Figures 4 to 6 illustrate the unique optics of the sensor 20, showing the PCB and optics assembly 54 in perspective view in Figure 4, exploded view in Figure 5 and in cross section in Figure 6.

The PCB and optics assembly comprises mechanical/optical components: main lens 57; lens support 68; light lens 64 and shield 62, together with PIR sensor 66 and light sensor 70 mounted on the PCB 56. The PCB further includes control switches 58 and 59 and other support circuitry (not shown).

The light sensor 70 is mounted directly to the PCB 56 and the PIR sensor 66 mounted coaxially a small distance above it, the separation between the PIR sensor and light sensor being sufficient for light to reach the light sensor . The PIR sensor 66 connects electrically to the PCB 56 by means of PIR legs 71 and 72.

The various mechanical components isolate the PIR sensor 66 from air currents which may otherwise compromise its operation. The infrared radiation incident on the PIR sensor is limited to that which passes through the main lens 57. The main lens 57 is a Fresnel lens as is well known in the art and focuses the incident infrared radiation upon the PIR sensor 66.

Visible light also passes through the main lens 57 and then through the light lens 64. The light lens 64 is a concave lens which refracts the visible light onto the light sensor 70 and is toroidal in shape, being mounted to surround the PIR sensor 66.

By having the PIR sensor 66 and the light sensor 70 coaxially aligned allows both sensors to have the same field of view. The PIR sensor's field of view being set by the main (Fresnel) lens 57 and the light sensor's field of view being set by the light lens 64 in conjunction with the lens support 68.

The reader will now appreciate the unique arrangement of the PIR and light sensors in the present invention which ensures that both sensors have the same field of view and thus facilitate superior control of lighting in response to movement and ambient lighting conditions.

It is to be understood that whilst the present invention relates to an embodiment of a PIR and light sensor being co-axially aligned it can equally well be applied to other types of sensors that operate in the electromagnetic spectrum.

Further advantages and improvements may very well be made to the present invention without deviating from its scope. Although the invention has been shown and described in what is conceived to be the most practical and preferred embodiment, it is recognized that departures may be made therefrom within the scope and spirit of the invention, which is not to be limited to the details disclosed herein but is to be accorded the full scope of the claims so as to embrace any and all equivalent devices and apparatus. Any discussion of the prior art throughout the specification should in no way be considered as an admission that such prior art is widely known or forms part of the common general knowledge in this field.

In the summary of the invention, except where the context requires otherwise due to express language or necessary implication, the word "comprising" is used in the sense of "including", i.e. the features specified may be associated with further features in various embodiments of the invention.

## Claims

1. A sensor comprising a PIR (passive infrared) sensor and a visible light sensor wherein the PIR sensor and the light sensor are coaxially aligned.

2. A sensor as in claim 1 wherein the field of view of the PIR sensor and the field of view of the light sensor are coincident.

3. A sensor as in claim 2 further comprising a Fresnel lens and a light lens wherein the Fresnel lens defines the field of view of the PIR sensor and the light lens defines the field of view of the light sensor.

4. A sensor as in claim 3 wherein the light lens is of a toroidal shape and the PIR sensor is located at the centre of the light lens.
